# EUROPEAN PATENT APPLICATION

(11) **EP 4 489 390 A1**
(43) Date of publication of application: **08.01.2025**
(21) Application number: 24186665.6
(22) Date of filing: 04.07.2024
(51) Int. Cl.: H04N 7/15

(54) **MULTITASKING IN A VIRTUAL REALITY ENVIRONMENT**

(30) Priority: 06.07.2023 US 202318219020
(71) Applicant: Mitel Networks Corporation, Ottawa, Ontario K2K 3K1 (CA)
(72) Inventor: Naidoo, Logendra, Ottawa, K1S 0W8 (CA); Murthy, Tejas, Bangalore (IN)
(74) Representative: McDougall, James

(57) **Abstract**

A computer system and method to permit a user to participate in multiple metaverses. The system and method include (1) one or more virtual reality (VR) servers configured to create multiple metaverses; (2) an avatar library in communication with each of the one or more VR servers; (3) a call center server in communication with the one or more VR servers and configured to communicate with a plurality of user operating devices, wherein the call center server is configured to position each unique user via one of the user operating devices into one or more of the multiple metaverses; and (4) a virtual user apparatus unique to a user and configured to permit the user to select between one or more of the multiple metaverses in which to participate.

## Description

### BACKGROUND

Metaverse spaces, also referred to as virtual reality (VR) constructs or spaces, cyberworlds, or three-dimensional (3D) spaces, are computer-based, simulated physical environments. They are intended for users to experience and interact, such as via digital representations, which can be avatars, personas or a representation of the users within the metaverse. In a virtual reality-based space, users may create a social network of friends and social groups, and/or engage in e-commerce (e.g., store or mall shopping). Users may also enter a virtual call center session to receive support. The metaverse can also be utilized to conduct videoconferencing sessions and meetings.

One metaverse usability issue is the ability for a user to multitask while in the metaverse, such as moving from one metaverse to another. Non-metaverse stimuli (such as a phone call or in person communication) can be observed by a user if the user is or is not in the metaverse. Users in the metaverse who, for example, are engaged in a videoconference call may receive another videoconference call or a call on a smartphone (voice call), or even a regular deskphone call, in which case the metaverse state of the user is impacted.

A user (or "participant") can appear in more than one metaverse at the same time, which means the ability to multitask within multiple metaverses is one attribute to achieve communications by the user in the multiverses. Real-world intrusions could be also transmitted to and accommodated within a metaverse or a user may pause or minimize the metaverse while attending to outside stimuli.

There currently is not an appropriate solution for a user to move between active metaverse states.

### SUMMARY

A first aspect of this disclosure includes a computer system configured to permit a user to participate in multiple metaverses, the computer system comprising: one or more virtual reality (VR) servers configured to create multiple metaverses; an avatar library in communication with each of the one or more VR servers, wherein the avatar library comprises a plurality of avatars; a call center server in communication with the one or more VR servers and configured to communicate with a plurality of user operating devices, wherein each of the plurality of user operating devices is associated with a unique user, and wherein the call center server is configured to position each unique user via one of the user operating devices into one or more of the multiple metaverses; and a virtual user apparatus generated by the call center server or at least one of the one or more VR servers, or the user operating device, wherein the virtual user apparatus is unique to a user and is in communication with the call center server, at least one of the one or more VR servers, and/or the user operating device, and wherein the virtual user apparatus is present in each of the multiple metaverses in which the user is participating, and is configured to permit the user to select between one or more of the multiple metaverses in which to participate.

The call center server may be configured to receive a command from one of the plurality of user operating devices unique to a user or from a virtual user apparatus unique to the user, and to communicate with the VR server and instruct the VR server to communicate with the avatar library and select a unique avatar from the avatar library and place the unique avatar into at least one of the multiple metaverses to represent the unique user.

The call center server may be configured to instruct the VR server to select (a) the same avatar for the unique user for each of the multiple metaverses in which the unique user participates, or (b) different avatars for the unique user for each of the multiple metaverses in which the unique user participates.

The computer system may further include the plurality of user operating devices, and wherein (a) each of the plurality of user operating devices may include an electronic display configured to display each of the multiple metaverses in three dimensions (3D), or (b) each user may utilize a separate 3D display device to view each of the multiple metaverses in 3D.

At least one of the one or more VR servers, the call center server, a plurality of the user operating devices, or a plurality of the virtual user apparatuses may be configured to permit a plurality of users to interact with each other while in at least one of the multiple metaverses.

The call center server and/or the one or more VR servers may provide at least one of the multiple metaverses the functionality of media, sound, and/or notifications from outside of the metaverse.

Each of the multiple metaverses may operate simultaneously.

The computer system may comprise multiple VR servers, wherein each of the multiple VR servers is configured to create one or more of the multiple metaverses.

A second aspect of this disclosure includes a computer-implemented method for creating multiple metaverses, wherein each of the multiple metaverses is configured to permit a plurality of virtual user apparatuses and/or user operating devices to simultaneously interact with each other inside of at least one of the multiple metaverses, the method comprising steps of: utilizing one or more VR servers to create multiple metaverses; creating, via the one or more VR servers, a call center server, or one or more user operating devices, the plurality of virtual user apparatuses, wherein each of the plurality of virtual user apparatuses is unique to a user and each of the one or more user operating devices is unique to the user; utilizing the call center server, which is in communication with the one or more VR servers, to communicate with the plurality of virtual user apparatus and/or the one or more user operating devices in order to permit each of the plurality of virtual user apparatus and/or one or more user operating devices to communicate with each other in one or more of the multiple metaverses; by utilizing an avatar library in communication with the one or more VR servers, permitting each of the plurality of virtual user apparatuses and/or the one or more user operating devices to select a unique avatar from an avatar library in communication with the one or more VR servers, and the one or more VR servers placing the unique avatar in one or more of the multiple metaverses to represent the unique user; and the user selecting via the virtual user apparatus unique to the user, which of the multiple metaverses in which to participate.

There may be a single VR server and the single VR server may create the multiple metaverses.

At least one metaverse may be work-related and at least one metaverse may be friend-related.

The one or more VR servers may be further configured to generate bots in one or more of the multiple metaverses, wherein at least one of the bots is controlled by at least one of the one or more VR servers and is configured to communicate with the unique avatar.

The one or more VR servers may be further configured to generate bots bots in a plurality of the multiple metaverses, wherein each bot has a different appearance and/or function, and each is configured to communicate with the unique avatar.

The VR server may be configured such that the unique avatar appears simultaneously in at least some of the multiple metaverses and is configured to simultaneously engage in communications in each of the at least some multiple metaverses.

A third aspect of this disclosure includes a computer system configured to create multiple metaverses in which users can conduct interactions, the computer system comprising: one or more VR servers configured to create the multiple metaverses; a call center server in communication with the one or more VR servers and configured to communicate with a plurality of user devices; an avatar library in communication with the one or more VR servers, wherein via the plurality of user devices, users can select a unique avatar and place it via the one or more VR servers or call center server into at least one of the multiple metaverses; a user operating device in communication with the one or more VR servers and/or the call center server; and a virtual user apparatus generated by one or more of the user operating device, the one or more VR servers, and/or the call center server, wherein the virtual user apparatus is configured to permit the user to select one or more of the multiple metaverses in which to participate.

The call center server and/or the one or more VR servers may be configured to permit (a) a plurality of the user operating devices and/or a plurality of the virtual user apparatuses to simultaneously participate in one of the multiple metaverses, and/or (b) the plurality of user devices and/or the plurality of the virtual user apparatuses to simultaneously participate in a plurality of the multiple metaverses.

Each user may communicate via the unique avatar for the user.

The computer system may be further configured to (a) reduce the size of an avatar, (b) reduce the size of one of the multiple metaverses, (c) change the appearance of an avatar, or (d) eliminate the appearance of the avatar, when (i) the user is active in another communication state, or (ii) when the user sends an appropriate command via the user selection device.

The VR server or call enter server may be configured so the user can replace one metaverse with another by voice command, facial movement, hand movement, body movement, or with the selection device.

The user may feel a transition effect from one of the multiple metaverses to a second of the multiple metaverses, and the transition effect may be one or more of a color change, a background change, an avatar change, a bot change, another visual change, a sound change, and a change to the appearance or function of the virtual user apparatus.

### BRIEF DESCRIPTION OF THE DRAWING FIGURES

The subject matter of the present disclosure is particularly pointed out and distinctly claimed in the concluding portion of this specification. A more complete understanding of the present disclosure, however, may best be obtained by referring to the detailed description and claims when considered in connection with the drawing figures, wherein like numerals denote like elements and wherein:
FIG. 1 is an exemplary system according to aspects of this disclosure.
FIG. 2 is an alternate exemplary system according to aspects of this disclosure.
FIG. 3 is an example of a computer-implemented method according to aspects of this disclosure.
FIG. 4 illustrates a user in a metaverse meeting or VR game.
FIG. 5 illustrates a user gesturing on incoming communication event.
FIG. 6 illustrates a user in a current metaverse and transitioning to another metaverse.
FIG. 7 illustrates a user in an active metaverse with other metaverses miniaturized.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

This disclosure includes a computer system and method in which a user can be part of multiple metaverse spaces at the same time. For example, a user may be interacting via an avatar to a customer support agent in a metaverse space in which an audio/chat conversation is occurring while at the same time skimming through a metaverse space via, as an example, Matterport. As used herein, "metaverse," "virtual reality" ("VR") space, and three-dimensional ("3D") space have the same meaning.

The present invention proposes the ability to multitask through, for example, miniaturization of an active metaverse when the user becomes active in another communication state, which can be another metaverse, a phone call, a two-dimensional (2D) video call, talking to someone in person, or other. Users can be part of multiple metaverse-related activities/spaces while also conducting a unified communication session (such as Microsoft^{®} Teams, Zoom^{®}, MiTeam, or voice-call). This is beneficial when a user is, for example, in a conversation with one or more customer agents in the metaverse and can simultaneously experience a metaverse space that is populated with a group of friends who are watching a movie.

An aspect of this multi-tasking utility in the metaverse is the creation of multiple placements of a user that model virtual representation as if a user is appearing in one space with all the applicable functionality (e.g., VR-media, or outside notifications, or other) Then, when a current metaverse session is being deprecated in favor of another metaverse session, the previous running metaverse session is minimized (or miniaturized or blurred) so the user is now present in the other metaverse. The user is given the ability to transport between multiple VR spaces through user control. If a concurrent metaverse ends, then the previous metaverse session that was miniaturized can be maximized to enable the user to re-enter it.

As used herein, the terms application, module, analyzer, engine, and the like can refer to computer program instructions, encoded on computer storage medium for execution by, or to control the operation of, data processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium is non-transitory and can also be, or be included in, one or more separate physical components or media (e.g., solid-state memory that forms part of a device, disks, or other storage devices).

As used herein, "engine" refers to a data-processing apparatus, such as a processor, configured to execute computer program instructions, encoded on computer storage medium, wherein the instructions control the operation of the engine. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus.

A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

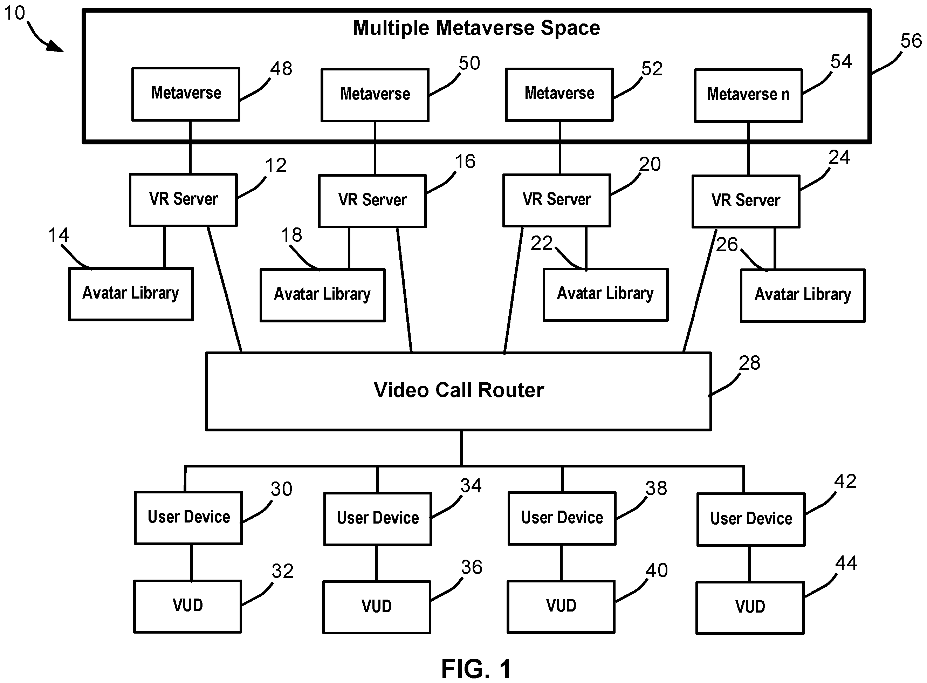

Turning now to the Figures, FIG. 1 shows a computer system 10 according to aspects of this disclosure. System 10 has a plurality of VR servers and can have any number of VR servers 12, 16, 20, 22, 24, each of which can generate one or more metaverses 12, 14, 16, 20, 22, 24 into which a user may enter. As shown there is a VR server 12 in communication with an avatar library 14, a VR server 16 in communication with an avatar library 18, a VR server 20 in communication with an avatar library 22, and a VR server 24, in communication with avatar library 26. A video call router 28 is in communication with user devices 30, 34, 38, and 42. Each user device 30, 34, 38, and 42 has a virtual user display 32, 36, 40, and 44, respectively.

Each avatar library is any suitable database or electronic device capable of storing or generating one or more avatars for use by users of system 10 in one or more metaverses 48, metaverse 50, metaverse 52, and metaverse 54, there can be any number of metaverses in a multiple metaverse space 56 made available to a user by system 10.

A video call router 28 is any server(s), processor(s), computer(s) or other electronic device(s) that can receive a video call or communication from one or more user devices, such as user device 30, which communicates with a virtual user display (VUD) 32, user device 34, which communicates with a VUD 36, user device 38, which communicates with a VUD 40, and user device 42, which communicates with VUD 44. A user device is any computing device that has videoconferencing capabilities and that can connect through system 10 to one or more metaverses 48, 50, 52, and 54 in multiple metaverse space 56.

In the operation of system 10, one or more users, who are persons, operate a user device, such as user device 30, user device 34, user device 38, or user device 42.

The user operates a user device to connect to video call router 28, which routes a videoconference request from the user device to a VR server 12, VR server 16, VR server 20, or VR server 24. According to the disclosure, a user device may be simultaneously connected to a plurality of the VR servers and thus be in communication with a plurality of metaverse 48, metaverse 50, metaverse 52, and metaverse 54.

When a user device is connected to a VR server, the user has an option to select an avatar from avatar library 14, avatar library 18, avatar library 22, or avatar library 26, depending upon with which VR server the user device is communicating. The avatar, if a user chooses to select one, will represent the user in the relevant metaverse. In the example system 10, a user device can communicate with any number of VR servers, select a different avatar from each avatar library in communication with the VR server, and have each selected avatar represent the user in the metaverse generated by the VR server.

Each user device 30, 34, 38, and 42 includes or is in communication with a virtual user device 32, 36, 40, and 44. The virtual user device is any electronic device, system, or control, such as a graphical user interface (GUI) that allows a user present in two or more metaverses 48, 50, 52, and 54 to be active and present in one of the metaverses, and to minimize each of the other metaverses in which the user's user device is connected. In this manner a user can move between the metaverses in multiple metaverse space 56. For example, being present and active in metaverse 48 and then moving to metaverse 50 and minimizing metaverse 48, and then moving back to metaverse 48 and minimizing metaverse 50. Accordingly, using system 10 a user can theoretically move between any number of metaverses.

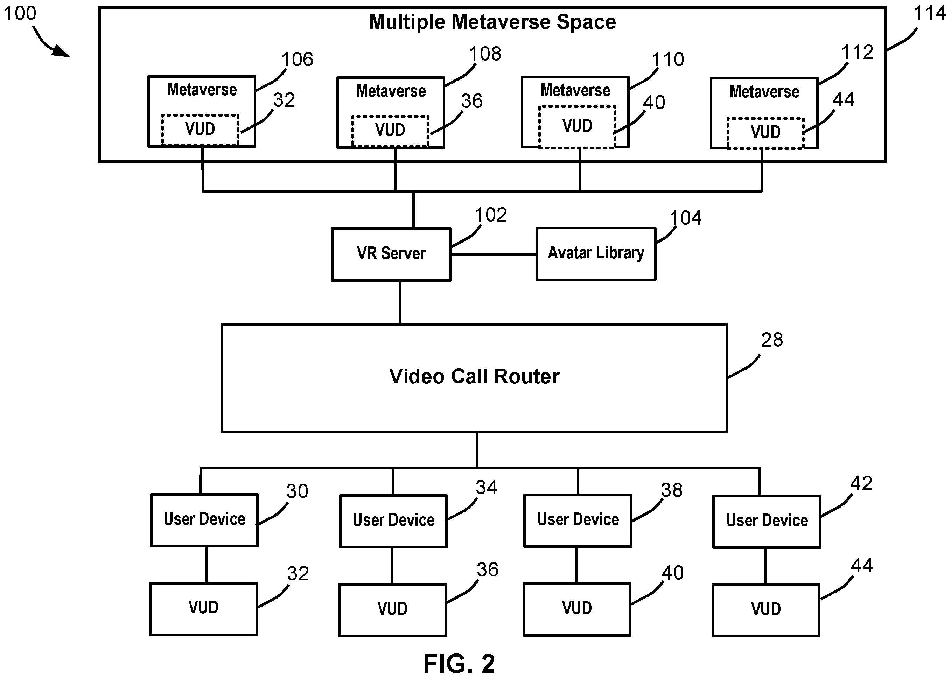

FIG. 2 shows an alternate computer system 100. System 100 has a single VR server 102 in communication with an avatar library 104. VR server 102 is capable of generating multiple metaverses, such as metaverses 106, 108, 110, and 112 in multiple metaverse space 114. VR server 102 is in communication with video call router 28, which is in communication with user devices 30, 34, 38, and 42 which were previously described. Each user device 30, 34, 38, and 42 has a virtual user display 32, 36, 40, and 44, respectively.

System 100 functions in the same manner as system 10 except that VR server 102 generates multiple metaverses 106, 108, 110, and 112 and a user device 30, 34, 38, and 42 can communicate with two or more of the metaverses through video call router 28 and VR server 102. A user can select different avatars from avatar library 104 for different metaverses, or the same avatar for each metaverse, or the same avatar for some metaverses and a different avatar for other metaverses.

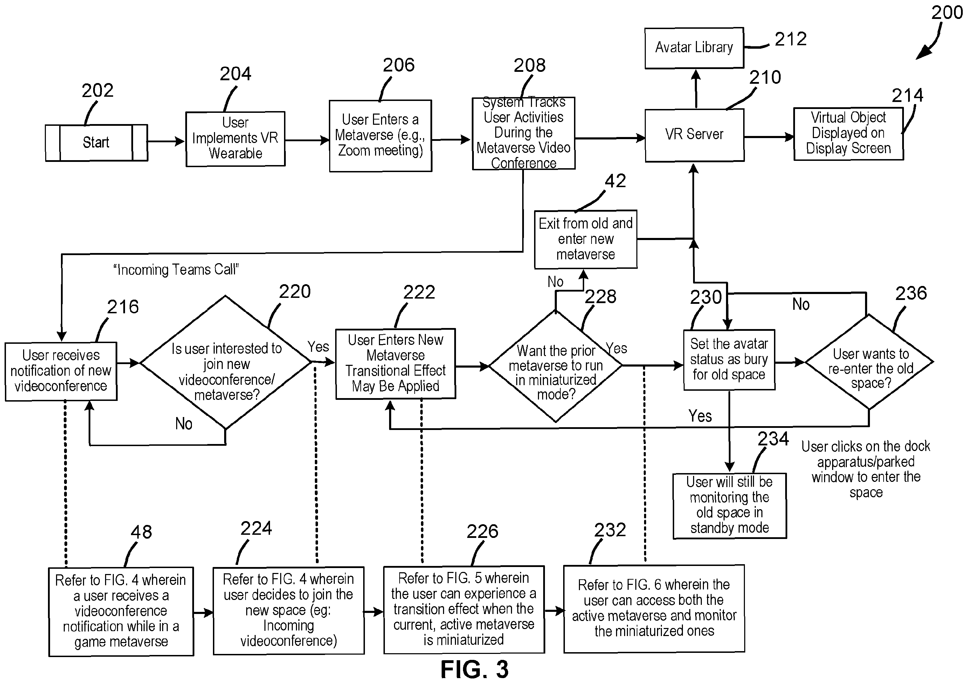

Figure 3 illustrates a method 200 according to aspects of this disclosure. The method begins at start step 200. At step 204 the user implements a VR wearable, such as VR goggles or glasses or any device that permits the user to see a metaverse in 3D. The user's device 30, 34, 38, and 42, such as a computer, may also project the metaverse in 3D or a structure may be placed over the screen of the user device to enable the user to see a metaverse in 3D.

At step 206 the user enters a metaverse, such as a Zoom meeting with friends or business associates. At step 208 the system, such as system 10 or system 100 tracks the user's activities during the metaverse video conference, which in this case is a Zoom call. A rendering module 210 creates a virtual object 212 that can be displayed on a display screen at step 214.

While the system 10 or system 100 is tracking the user activities at step 208, the user may receive an incoming call, such as another video conference call. In this example, the incoming call is a Microsoft Teams call. At step 216 the user receives a notification of the new videoconference/metaverse, which the user can join in 3D. at step 220, the user decides whether or not to enter the new videoconference. If the user chooses not to enter the new metaverse he/she remains in the existing metaverse. If the user enters the new metaverse at step 222, a transitional effect may be applied so the user realizes he/she has left one metaverse and entered another. The transitional effect may be one or more of sound(s) (such as a swish sound), imagery, or images.

At step 228, the user can choose to have the prior metaverse run in a miniaturized mode or any mode that is not distracting from the user being in the new metaverse. If the user chooses to have the old metaverse run in a miniaturized mode, at step 230 the user's avatar (should he/she have had one) status in the metaverse is "bury," which means that the user's avatar changes such that other persons in the old metaverse realize that the user is no longer active in the old metaverse. The user's avatar in the old metaverse, for example, could change to a non-moving white, black, or gray image and/or be surrounded by hashed lines. Alternatively, the user may at step 242 choose to exit the old metaverse and enter the new metaverse.

At step 234 the user can still monitor the old metaverse if he/she desires while in the new metaverse.

At step 236 the user can decide whether to re-enter the old metaverse. If the user does not his/her avatar is still in bury mode in the old metaverse(if the user has not disconnected from the old metaverse). If the user chooses to re-enter the old metaverse, he/she returns to step 222 in which the user transitions from the new metaverse to the old metaverse and may experience a transitional effect. At step 228 the user can decide to run the new space in a miniaturized mode and set the avatar for the new space in a bury mode. Or, at step 242 the user may exit from the new space. The appearance of the avatar may change in any metaverse when it is in the bury mode.

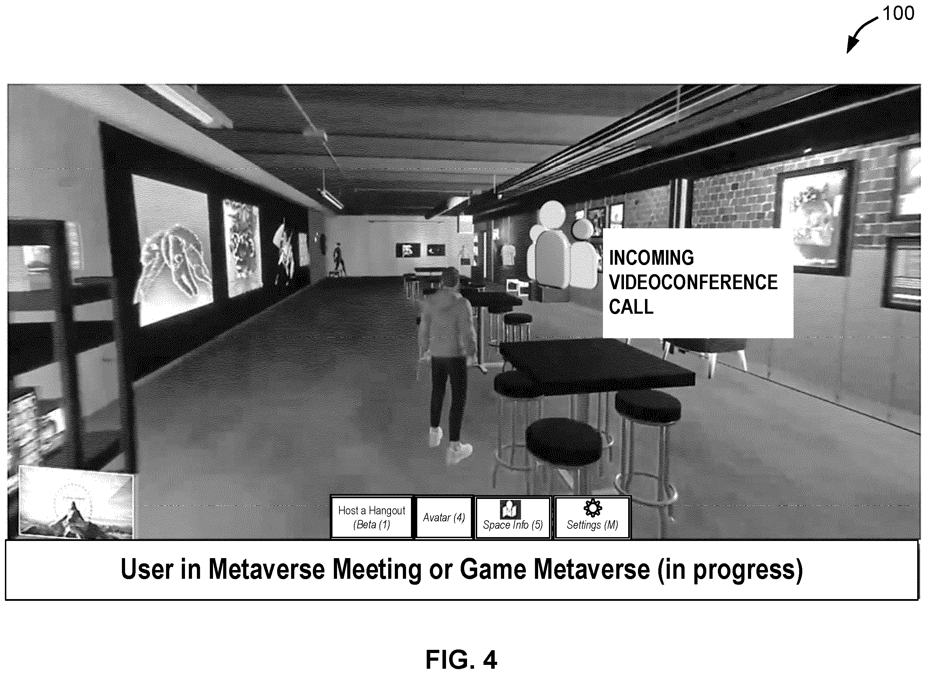

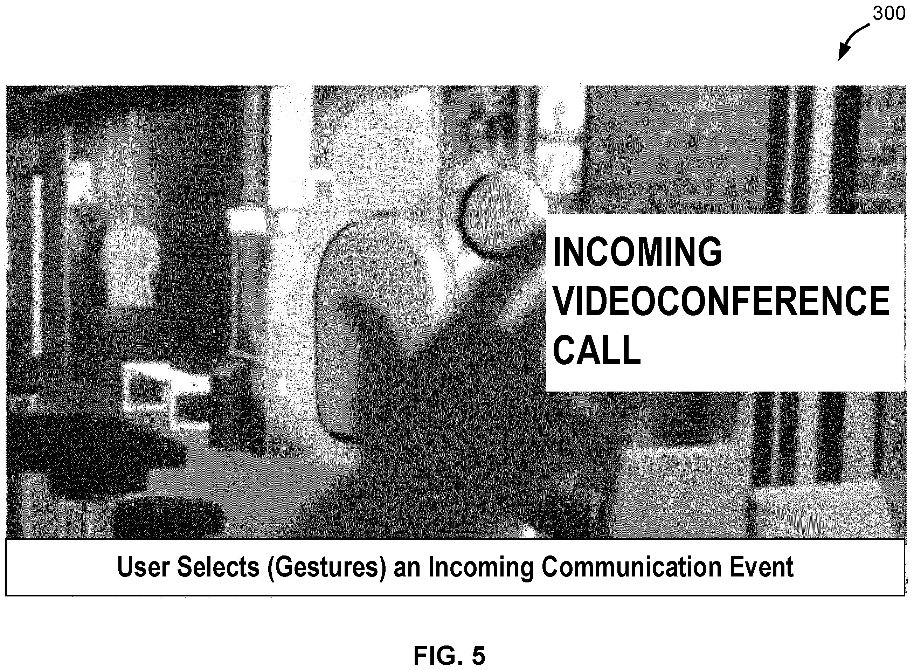

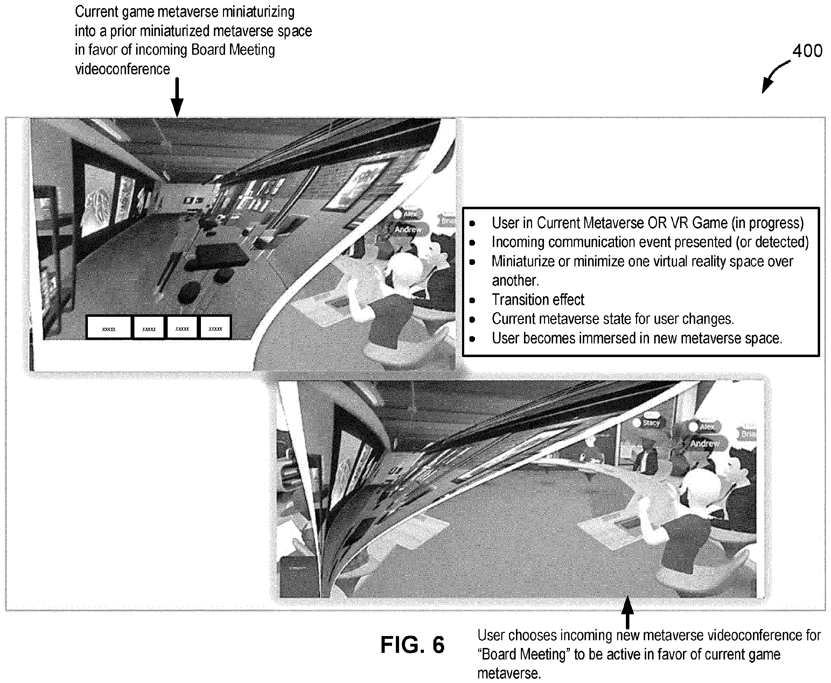

At step 218 a user can receive a videoconference notification while participating in a game metaverse, which is depicted in FIG. 4. At step 224 the user can join the videoconference in miniaturize or leave the game metaverse. At step 226 the user may experience a transition affect when moving form one metaverse to the other, which is illustrated in FIG. 5. At step 232 the user can access the active metaverse and monitor the miniaturized metaverses, which is further illustrated in FIG. 6.

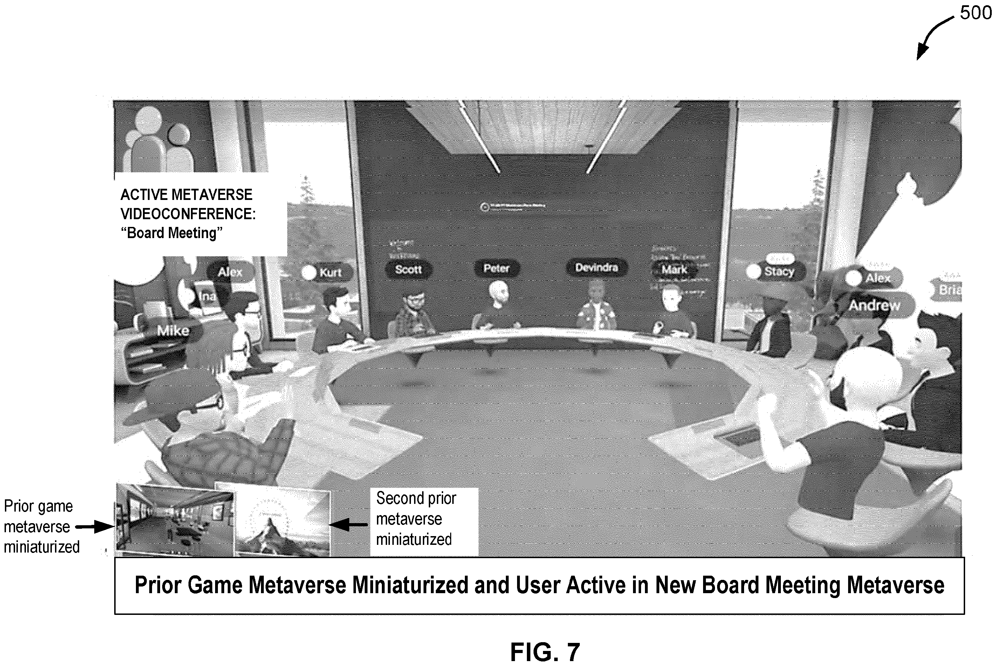

FIG. 4 illustrates a user in a metaverse meeting or game metaverse, wherein there is an incoming videoconference all. FIG 5 shows the user selecting the incoming videoconference call of FIG. 4 by gesturing with his/her hand, although any suitable manner of movement by the user could select or reject the incoming videoconference call, or the user may use a device to accept the call. FIG. 6 illustrates a user moving from a first game or meeting metaverse to a second meeting metaverse and the second metaverse opening while the first is being miniaturized. FIG. 7 shows the user in the second videoconference metaverse with the first metaverse and another metaverse miniaturized.

The description of embodiments provided herein is merely exemplary and is intended for purposes of illustration only; the following description is not intended to limit the scope of the claims. Moreover, recitation of multiple embodiments having stated features is not intended to exclude other embodiments having additional or fewer features or other embodiments incorporating different combinations of the stated features. The methods and systems according to this disclosure and claims can operate in a premise, cloud-based, or hybrid environment.

The features of the various embodiments may be stand alone or combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A computer system configured to permit a user to participate in multiple metaverses, the computer system comprising:
one or more virtual reality, VR, servers configured to create multiple metaverses;
an avatar library in communication with each of the one or more VR servers, wherein the avatar library comprises a plurality of avatars;
a call center server in communication with the one or more VR servers and configured to communicate with a plurality of user operating devices, wherein each of the plurality of user operating devices is associated with a unique user, and wherein the call center server is configured to position each unique user via one of the user operating devices into one or more of the multiple metaverses; and
a virtual user apparatus generated by the call center server or at least one of the one or more VR servers, or the user operating device, wherein the virtual user apparatus is unique to a user and is in communication with the call center server, at least one of the one or more VR servers, and/or the user operating device, and wherein the virtual user apparatus is present in each of the multiple metaverses in which the user is participating, and is configured to permit the user to select between one or more of the multiple metaverses in which to participate.

2. The computer system of claim 1, wherein the call center server is configured to receive a command from one of the plurality of user operating devices unique to a user or from a virtual user apparatus unique to the user, and to communicate with the VR server and instruct the VR server to communicate with the avatar library and select a unique avatar from the avatar library and place the unique avatar into at least one of the multiple metaverses to represent the unique user.

3. The computer system of claim 1 or claim 2, wherein the call center server is configured to instruct the VR server to select (a) the same avatar for the unique user for each of the multiple metaverses in which the unique user participates, or (b) different avatars for the unique user for each of the multiple metaverses in which the unique user participates.

4. The computer system of any preceding claim, further comprising the plurality of user operating devices, and wherein (a) each of the plurality of user operating devices includes an electronic display configured to display each of the multiple metaverses in three dimensions (3D), or (b) each user utilizes a separate 3D display device to view each of the multiple metaverses in 3D.

5. The computer system of any preceding claim, wherein at least one of the one or more VR servers, the call center server, a plurality of the user operating devices, or a plurality of the virtual user apparatuses is configured to permit a plurality of users to interact with each other while in at least one of the multiple metaverses.

6. The computer system of any preceding claim, wherein the call center server and/or the one or more VR servers provides at least one of the multiple metaverses the functionality of media, sound, and/or notifications from outside of the metaverse.

7. The computer system of any preceding claim, wherein there is a single VR server and the single VR server creates the multiple metaverses.

8. The computer system of any of claims 1 to 6, comprising multiple VR servers, wherein each of the multiple VR servers is configured to create one or more of the multiple metaverses.

9. The computer system of any of claims 2 to 8, wherein the one or more VR servers are further configured to generate bots in one or more of the multiple metaverses, wherein at least one of the bots is controlled by at least one of the one or more VR servers and is configured to communicate with the unique avatar.

10. The computer system of any of claims 2 to 9, wherein the one or more VR servers are further configured to generate bots in a plurality of the multiple metaverses, wherein each bot has a different appearance and/or function, and each bot is configured to communicate with the unique avatar.

11. The computer system of any of claims 2 to 10, wherein the VR server is configured such that the unique avatar appears simultaneously in at least some of the multiple metaverses and is configured to simultaneously engage in communications in each of the at least some multiple metaverses.

12. The computer system of any preceding claim, wherein the call center server and/or the one or more VR servers is configured to permit (a) a plurality of the user operating devices and/or a plurality of the virtual user apparatuses to simultaneously participate in one of the multiple metaverses, and/or (b) the plurality of user devices and/or the plurality of the virtual user apparatuses to simultaneously participate in a plurality of the multiple metaverses.

13. The computer system of any preceding claim, wherein the computer system is further configured to (a) reduce the size of an avatar, (b) reduce the size of one of the multiple metaverses, (c) change the appearance of an avatar, or (d) eliminate the appearance of the avatar, when (i) the user is active in another communication state, or (ii) when the user sends an appropriate command via a user selection device.

14. The computer system of any preceding claim, wherein the VR server or call enter server is configured so the user can replace one metaverse with another by voice command, facial movement, hand movement, body movement, or with a user selection device.

15. A computer-implemented method for creating multiple metaverses, wherein each of the multiple metaverses is configured to permit a plurality of virtual user apparatuses and/or user operating devices to simultaneously interact with each other inside of at least one of the multiple metaverses, the method comprising steps of:
utilizing one or more VR servers to create multiple metaverses;
creating, via the one or more VR servers, a call center server, or one or more user operating devices, the plurality of virtual user apparatuses, wherein each of the plurality of virtual user apparatuses is unique to a user and each of the one or more user operating devices is unique to the user;
utilizing the call center server, which is in communication with the one or more VR servers, to communicate with the plurality of virtual user apparatus and/or the one or more user operating devices in order to permit each of the plurality of virtual user apparatus and/or one or more user operating devices to communicate with each other in one or more of the multiple metaverses;
by utilizing an avatar library in communication with the one or more VR servers, permitting each of the plurality of virtual user apparatuses and/or the one or more user operating devices to select a unique avatar from an avatar library in communication with the one or more VR servers, and the one or more VR servers placing the unique avatar in one or more of the multiple metaverses to represent the unique user; and
the user selecting via the virtual user apparatus unique to the user, which of the multiple metaverses in which to participate.
